# EUROPEAN PATENT SPECIFICATION

(11) **EP 0 608 944 B1**
(45) Date of publication and mention of the grant of the patent: **01.10.1997**
(21) Application number: 94200149.6
(22) Date of filing: 27.01.1994
(51) Int. Cl.: A01N 43/90, A01N 63/02, A23L 3/3463, A23B 4/22, A23B 7/155, A23C 19/11

(54) **A fungicide composition to prevent the growth of mould on foodstuffs and agricultural products**
Fungizide Mittel zur Verhinderung des Wachstums des Schimmels bei Lebensmitteln und landwirtschaftlichen Produkten
Composition fongicide pour empêcher la croissance des moisissures sur les nourritures et les produits agricoles

(30) Priority: 27.01.1993 EP 93200220
(43) Date of publication of application: 03.08.1994
(73) Proprietor: GIST-BROCADES N.V., NL-2600 MA Delft (NL)
(72) Inventor: van Rijn, Ferdinand Theodorus Jozef, NL-2623 HM Delft (NL); Tan, Hong Sheng, NL-2665 TG Bleiswijk (NL); Warmerdam, Martinus Johannes Maria, NL-2613 ZD Delft (NL)
(74) Representative: Matulewicz, Emil Rudolf Antonius, Dr.

(56) References cited:
- EP-A- 0 513 922
- US-A- 4 148 891
- JOURNAL OF APPLIED BACTERIOLOGY vol. 52, no. 2 , April 1982 pages 259 - 265 G.L.PETTIPHER ET. AL. 'A bacteriostatic mixture for milk samples and its effect on bacteriological, cytological and chemical compositional analysis'
- CHEMICAL PATENTS INDEX, BASIC ABSTRACTS JOURNAL Section Ch, Week 8633, 8 October 1986 Derwent Publications Ltd., London, GB; Class C, AN 215097 & JP-A-61 146 153 (NIPPON NOSAN KOGYO) 3 July 1986
- MICROBIOLOGIE-ALIMENTS-NUTRITION vol. 7 , 1989 , FR pages 81 - 84 R.LODI ET. AL. 'Nouvelles applications de la natamycine sur les fromages typiques italiens'
- DISSERTATION ABSTRACTS INTERNATIONAL vol. 47, no. 4 , 1986 page 1347 S.J.LEE 'Effect of food preservatives on fungal interaction and aflatoxin production'

## Description

The invention relates to an antifungal composition to be used on foodstuffs such as cheese or sausages or on agricultural products such as fruit, vegetables, tubers and flower bulbs, to a method for treating these foodstuffs and products with the preparation, and to foodstuffs and agricultural products when so treated.

### Use of natamycin to prevent growth of mould (Ref. 1-12, 15, 17, 18, 20-22)

For more then 20 years natamycin has been used to prevent growth of mould on cheese and sausages.

Cheeses are treated by immersion in a suspension of natamycin in water or covered by an emulsion of a polymer in water, (mostly polyvinyl acetate). Sausages are mainly treated by immersion or by spraycoating with a suspension of natamycin in water. Usually aqueous suspensions for immersion treatments contain 0.1 to 0.2% of natamycin, while polymer emulsions for coating purposes contain 0.01 to 0.05% of natamycin.

Mostly these treatments are highly effective at preventing spoilage by mould. However because of the low solubility of natamycin, those moulds which are less susceptible to natamycin are not fully inhibited, thus some spoilage may still occur. Examples of fungi which are more tolerant towards natamycin are *Verticilium cinnabarinum, Botrytis cinerea* and *Trichophyton* species. Among *Aspergillus, Fusarium* and *Penicillium* species also more tolerant species may be found. An example of such a species is *Penicillium echinulatum* var. *discolor.*

### Use of organic acids to prevent growth of spoilage flora (Ref. 6-22)

Spoilage by microflora may also be controlled by the use of organic acidic compounds or their salts. Examples are benzoic acid, sorbic acid and propionic acid or their salts. Mostly these acids are used to control bacterial spoilage, but to some extend moulds are also inhibited. However these acids are only effective when used in high concentrations. For instance the effective concentration of calcium sorbate in a polymer coating is from 3 to 5%. Moreover the use of high concentrations of these acids often leads to organoleptic defects of the foodstuff.

### Use of natamycin and acids (Ref. 23-25)

In some cases the disadvantages mentioned before may be solved by using natamycin together with an organic acid, optionally in combination with a solvent like an alkanol. DE-2529532 (Gist-Brocades N.V.) describes the combination of natamycin with an organic acid and an alcohol in an aqueous system. The combination is especially effective for the protection of citrus fruit against decay by mould. Due to the higher solubility of natamycin in the system not only is the mould on the surface inhibited, but also growth beneath the surface of the peel is inhibited. The disadvantage of such a system is the necessity of using an alcohol and the lesser stability of natamycin in the system compared to that in water.

J-61146153 (Nippon Nosan Kogyo) describes the use of an antibiotic and an antibacterial compound in an aqueous organic acid solution to prevent contamination of the mulberry leaf beds in which silkworms are reared. The antibiotic may be of the macrolide type (like natamycin) and the antibacterial is e.g. sorbic acid, sorbate, propionic acid or propionate. The antibiotic controls mould and the acid controls bacteria.

BE-848934 (Gist-brocades) describes liquid antifungal compositions containing natamycin and an acidic organic compound for treating infection in animals, particularly livestock. A preferred acid is e.g. citric acid. The liquid composition preferably has a pH of 2-4.5. The composition is especially useful for the treatment of infections in cattle caused by *Trichophyton verrucosum,* a micro-organism which is more tolerant to natamycin than food-mould. (The MIC or minimal inhibitory concentration of *Trichophyton* species is 12.5-25.0 mcg/ml and that of food spoilage fungi is 1-10 mcg/ml; ref. 26). Apparently the effectiveness of the composition is due to the increase in solubility of natamycin at low pH. Unfortunately natamycin is relatively unstable at low pH and therefore the solution is only useful for a limited length of time.

Lodi et al. (ref. 22) describes experiments using combinations of natamycin with potassium sorbate and/or sodium propionate for the treatment of cheeses. In general the results are satisfactory. However because of the poor action of sorbate and propionate together, the combination of natamycin with sodium propionate and potassium sorbate has no additional advantages. A further disadvantage is that high concentrations of acidic antifungal agents are necessary.

Tortorello et al. (ref. 21) describe the control of spoilage flora on cottage cheese using natamycin together with propionate. The natamycin is used for the control of yeast and of *Penicillium* species and the propionate for the control of *Bacillus* and *Pseudomonas* species.

In summary, natamycin provides an effective means of controlling common food spoilage mould, but is insufficiently soluble in water to inhibit more tolerant species.

EP-A-513922 discloses a coating that comprises an antifungal agent. In order to protect the emulsion against microbial decay, preservative can be added, for example an acid type. Moreover, the emulsion might be buffered using a citrate buffer.

Journal of Applied Bacteriology 52, 2, 259-265. This document teaches the use of a bacteriostatic mixture, which differs from the inhibition of the growth of moulds, especially in case when these moulds are less sensitive to antifungal compounds of the polyene type. Further, this mixture consists of four ingredients: boric acid, glycerol, sodium propionate and nystatin.

Organic acidic compounds and their salts can be used to control both bacterial and fungal flora, but fungi with a high tolerance to natamycin may still be difficult to control. In some cases this problem may be solved by using an extremely low pH and/or by using an additional solvent like an alcohol, but in general the natamycin in the solution is unstable.

Unexpectedly it has been found that the combined action towards mould of a polyene antifungal agent and an acidic antifungal compound is markedly enhanced when at least one further acid is added. The present invention therefore provides a composition comprising
- a polyene antifungal agent,
- an acidic antifungal compound or salt thereof, said acid antifungal compound is benzoic acid, propionic acid, or sorbic acid and
- an additional acid or salt thereof, said additional acid is acetic acid or lactic acid.
According to one aspect of the invention the polyene antifungal agent, is natamycin. In particular alkali metal and alkali earth metal salts are useful. In particular the composition is useful to prevent the growth of mould which are more tolerant towards polyene fungicides. A preferred embodiment of the invention is the combination of natamycin with propionic or sorbic acid and acetic acid or their alkali metal or alkali earth metal salts.

The invention also provides a method for treating foods and agricultural products with said compositions. The treatment generally comprises immersing the products in a liquid containing the composition or the composition may be incorporated into a coating emulsion which can be applied by brushing or with a spray device.

Further the invention provides foods and agricultural products when treated with a composition of the invention.

The composition of the present invention generally comprises from 0.01% to 1% by weight antifungal agent, from 0.05% to 5% by weight acidic antifungal compound and from 0.05% to 5% by weight additional acidic compound.

The polyene antifungal agent may be, for example, natamycin, lucensomycin, nystatin or amphotericin B. Preferred polyenes are natamycin and lucensomycin.

When products are coated by immersion, the solution in which they are immersed generally comprises 0.01% (w/v) to 2% (w/v), preferably from 0,01% (w/v) to 1% (w/v) antifungal agent. The immersion solution may be aqueous, or non-aqueous. When an aqueous system is used the addition of a surfactant may be advantageous in particular for treating objects with a hydrophobic surface.

Useful surfactants are for example anionic tensides like sodium lauryl sulphate or polyethylene alkyl ethers like Cetomacrogol® 1000 or polyoxyethylene alkyl ethers like Tween® 60.

In a coating emulsion the amount of natamycin may be from 0.005 to 2% (w/v), preferably from 0.01 to 1% (w/v) and more preferably from 0.01 to 0.5% (w/v). The coating emulsion may be of the oil in water or water in oil type. According to a preferred embodiment, the emulsion is one which is routinely brought into contact with the product. For example, for the treatment of hard cheeses an aqueous polymer emulsion of the polyvinyl acetate type may be used.

The organic acidic antifungal agent may be benzoic acid, propionic acid, salicylic acid, sorbic acid or an alkali metal or alkali earth metal salt thereof. The acids may be used in an amount of 0.01 to 10% (w/v), preferably 0.05 to 5% (w/v), more preferably 0.1 to 3% (w/v).

The additional acids may be one or more chosen from the following; citric acid, acetic acid, hydrochloric acid, tartaric acid, fumaric acid, ascorbic acid, lactic acid, sorbic acid, propionic acid, butyric acid or an alkali metal or alkali earth metal salt thereof. The amount of the additional organic acid may be from 0.01 to 10% (w/v), preferably 0.05 to 5% (w/v), more preferably 0.1 to 3% (w/v).

The composition is generally incorporated in an aqueous solution or suspension for immersion treatments of foods or agricultural products. The solution or suspension may also be applied by spraying it onto the product. Further the composition may be incorporated in a coating emulsion. Accordingly, the present invention provides liquid preparations, for example solutions and emulsions for treating foods or agricultural products containing said composition. In principle all kinds of emulsions are suitable, for example a polymer emulsion of the polyvinyl acetate type may be used for treatment of cheeses. Preferably the pH of the liquid preparations is from 1 to 10, more preferably from 2 to 8 and most preferable from 3.5 to 7.5. The pH of said preparations may be adjusted by any method e.g. by adding an acidic or a basic compound. Useful acids are for example citric acid, lactic acid, hydrochloric acid, phosphoric acid, sulfuric acid or tartaric acid. Useful basic compounds are for example sodium hydroxide, potassium hydroxide, ammonia or calcium hydroxide.

The Figures illustrate the average amount of colonies per 5 x 5 x 5 cm³ cube of cheese as a function of time.

### LEGENDS TO THE FIGURES

- Figure 1:: Comparison of the effect on the inhibition of *Penicillium echinulatum* var. *discolor* on cheese by a treatment with blank Plasticoat® or Plasticoat® containing resp. natamycin, calcium propionate or calcium acetate.
- Figure 2:: Comparison of the effect on the inhibition of *Penicillium echinulatum* var. *discolor* on cheese by a treatment with blank Plasticoat® or Plasticoat® containing resp. natamycin alone or natamycin in combination with calcium propionate and/or calcium acetate.
- Figure 3:: Comparison of the effect on the inhibition of *Penicillium echinulatum* var. *discolor* on cheese by a treatment with blank Plasticoat® or Plasticoat® containing natamycin alone or natamycin in combination with different amounts of calcium propionate with or without an additional amount of calcium acetate.
- Figure 4:: Comparison of the effect on the inhibition of *Aspergillus ochraceus* on cheese by a treatment with blank Plasticoat® or Plasticoat® containing resp. natamycin alone or natamycin in combination with calcium propionate and/or calcium acetate.
- Figure 4a:: Comparison of the effect on the inhibition of *Aspergillus parasiticus* on cheese by a treatment with blank Plasticoat® or Plasticoat® containing resp. natamycin alone or natamycin in combination with calcium propionate and/or calcium acetate.
- Figure 5:: Comparison of the effect on the inhibition of *Penicillium echinulatum* var. *discolor* on cheese by a treatment with blank Plasticoat® or Plasticoat® containing resp. natamycin alone or natamycin in combination with sodium benzoate and/or calcium acetate.

All publications and patent applications cited in this specification are herein incorporated by reference as if each individual publication or patent application was specifically and individually indicated to be incorporated.

### EXAMPLES

The present invention is illustrated by the following Examples.

### Example 1

In the following experiment the effect of natamycin (0.05%), calcium propionate (2%) and calcium acetate (1.5%), separately and in combination, on mould prevention on the surface of cheese was compared.

The different compositions (see Table 1) were incorporated into Plasticoat®, an aqueous emulsion of polyvinyl acetate acquired from National Starch & Chemical B.V., which is used as a cheese coating. When necessary the pH of the different compositions were adjusted to 4.0 by the addition of a 90% solution of L(+)-lactic acid .

**TABLE 1**

| NUMBER | COMPOSITION |
|---|---|
| | Figure 1 |
| 1 | blank Plasticoat® |
| 2 | natamycin 0.05% (reference) |
| 3 | Ca-propionate 2.0% |
| 4 | Ca-acetate 1.5% |

| | Figure 2 |
|---|---|
| 1 | blank cheesecoating |
| 2 | natamycin 0.05% (reference) |
| 5 | natamycin 0.05% + Ca-propionate 2.0% |
| 6 | natamycin 0.05% + Ca-acetate 1.5% |
| 7 | Ca-propionate 2.0% + Ca-acetate 1.5% |
| 8 | natamycin 0.05% + Ca-propionate 2.0% + Ca-acetate 1.5% |

A freshly brined wheel of Gouda cheese was first cut horizontally into two parts. Each part was then cut into pieces of 5 by 5 by 5 cm. Only pieces with a flat original surface were taken for the experiment. The pieces of cheese were dipped into a bath of melted paraffin of 80 °C in such a manner that the original surface area remained free of paraffin, while the other five surfaces were covered by a thin film of solidified paraffin.

The original surface area (the rind) was then inoculated with about 6 x 10³ CFU (Colony Forming Units) per cm² of a mixture of spores of three strains of *Penicillium echinulatum* var. *discolor* (CBS numbers 611.92, 612.92 and 613.92, deposited on December 8, 1992 with the CBS). The inoculation was performed by applying 0.15 ml of a spore suspension containing about 10⁶ CFU/ml to the surface of the piece of cheese. The inoculum was evenly divided over the surface by means of a sterile swab, which was saturated with the original spore suspension.

After standing overnight in closed plastic boxes at about 6°C the pieces of cheese were treated with the different compositions. For each treatment 10 pieces of cheese were taken. On each piece 0.8 ml of the Plasticoat® composition was applied and evenly spread over the surface of the cheese by means of a sterile rectangular piece of plastic spatula of about 2 by 5 cm.

After standing for 2 hours at ambient conditions the pieces of cheese were incubated at 15°C and a relative humidity of 95%.

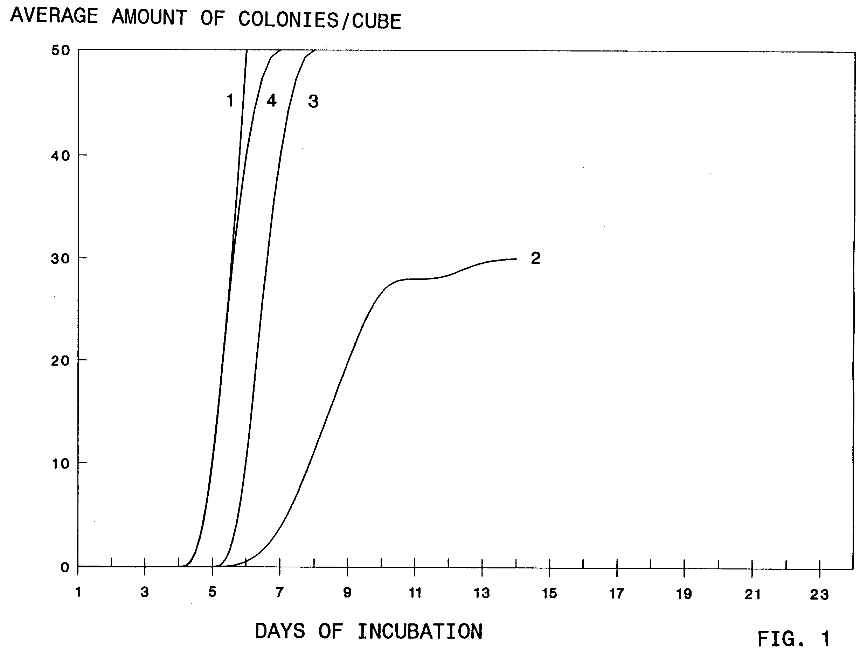

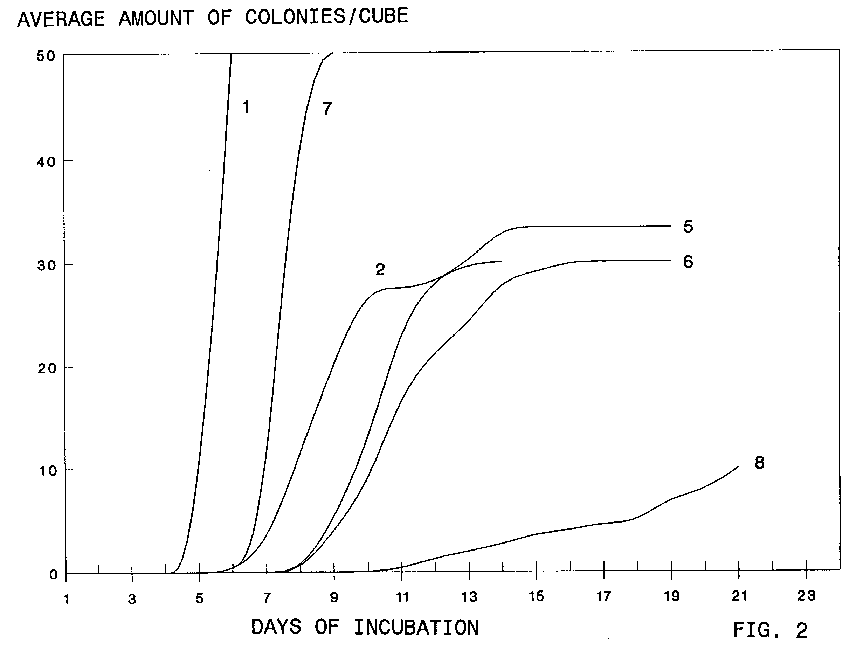

Every day the amount of visible colonies formed on the pieces of cheese was counted and the average amount per piece calculated. When the amount of colonies on a piece of cheese exceeded the value of 50, the piece of cheese was considered to be totally covered with mould.
The results are shown in Figures 1 and 2.

It is clear that the treatment with a composition according to the invention (number 8) resulted in a protection against mould growth which was better than a treatment with the single components (numbers 2, 3 and 4) or a combination of two of each component (numbers 5, 6 and 7).

The pieces treated with only Plasticoat® (blank, number 1) and the pieces treated with calcium acetate or calcium propionate alone (resp. 4 and 3) were totally covered with mould within 6 days. The pieces which were treated with a combination of calcium propionate and calcium acetate (7) were totally covered by mould within 7 days. The pieces which were treated with natamycin alone (2) remained free of mould during 6 days, but became gradually more covered with mould until after about 9 days the average amount of colonies reached a maximum value of approximately 30. The pieces treated with natamycin and calcium propionate (5) or with natamycin and calcium acetate (6) were free of mould up to 9 days, but after about 12 days an average amount of about 30 colonies per piece was reached. The combination of natamycin and the two acids however extended the mouldfree period to 11 days, while after 20 days still only an average amount of about 10 colonies per piece of cheese was reached.

### Example 2

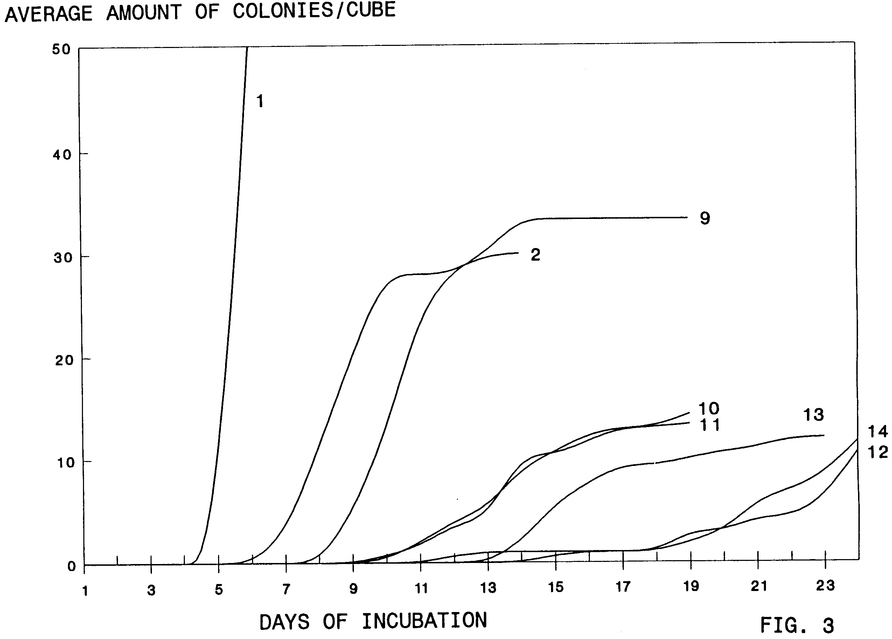

In the same series of experiments of Example 1 the concentration of calcium propionate was also varied. The different variations are summarized in Table 2 (see Table 2) and the results are summarized in Figure 3. The results demonstrated very clearly the additional effect of calcium acetate to the mould prevention of the combination of natamycin with calcium propionate. In every case the mould prevention was enhanced by the addition of 0.5% of calcium acetate. (Resp. composition 10 versus composition 9, 12 versus 11 and 14 versus 13)

**TABLE 2**

| NUMBER | COMPOSITION |
|---|---|
| | Figure 3 |
| 1 | blank Plasticoat® |
| 2 | natamycin 0.05% (reference) |
| 9 | natamycin 0.05% + Ca-propionate 2% |
| 10 | natamycin 0.05% + Ca-propionate 2% + Ca-acetate 0.5% |
| 11 | natamycin 0.05% + Ca-propionate 3% |
| 12 | natamycin 0.05% + Ca-propionate 3% + Ca-acetate 0.5% |
| 13 | natamycin 0.05% + Ca-propionate 4% |
| 14 | natamycin 0.05% + Ca-propionate 4% + Ca-acetate 0.5% |

### Example 3

In the following experiment the inhibition of the growth on cheese of *Aspergillus ochracheus* by natamycin (0.05%) and by the combination of natamycin with calcium propionate (2%) and/or calcium acetate (1.5%) was compared. This strain of *Aspergillus ochracheus,* like *Penicillium echinulatum* var. *discolor,* is a species which is less susceptible to the action of natamycin.

The different compositions (Table 3) were incorporated into Plasticoat®. When necessary the pH of the different compositions were adjusted to 4.0 by the addition of a 90% solution of L(+)-lactic acid.

**TABLE 3**

| NUMBER | COMPOSITION |
|---|---|
| | Figure 4 |
| 15 | blank Plasticoat® |
| 16 | natamycin 0.05% (reference) |
| 17 | natamycin 0.05% + Ca-propionate 2.0% |
| 18 | natamycin 0.05% + Ca-acetate 1.5% |
| 19 | natamycin 0.05% + Ca-propionate 2.0% + Ca-acetate 1.5% |

A freshly brined wheel of Gouda cheese was first cut horizontally into two parts. Each part was then cut into pieces of 5 by 5 by 5 cm. Only pieces with a flat original surface were taken for the experiment. The pieces of cheese were dipped into a bath of melted paraffin of 80 °C in such a manner that the original surface area remained free of paraffin, while the other five surfaces were covered by a thin film of solidified paraffin.

The original surface area (the rind) was then inoculated with about 6 x 10³ CFU per cm² of spores of *Aspergillus ochracheus* (CBS number 659.93, deposited on December 15, 1993 with the CBS). The inoculation was performed by applying 0.15 ml of a spore suspension containing about 10⁶ CFU/ml to the surface of the piece of cheese. The inoculum was evenly divided over the surface by means of a sterile swab, which was saturated with the original spore suspension.

After standing overnight in closed plastic boxes at about 6 °C the pieces of cheese were treated with the different compositions. For each treatment 6 pieces of cheese were taken. On each piece 0.8 ml of the Plasticoat® composition was applied and evenly divided over the surface of the cheese by means of a sterile rectangular plastic spatula of about 2 by 5 cm.

After standing for 2 hours at ambient conditions the pieces of cheese were incubated at 15 °C and a relative humidity of 95%.
Every day the amount of visible colonies formed on the pieces of cheese was counted and the average amount per piece calculated. When the amount of colonies on a piece of cheese exceeded the value of 50, the piece of cheese was considered to be totally covered with mould.

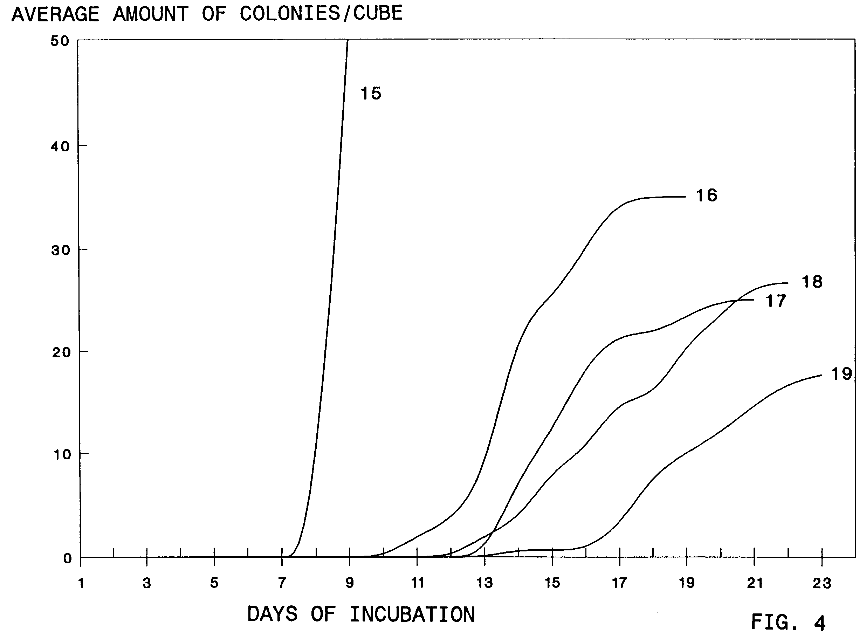

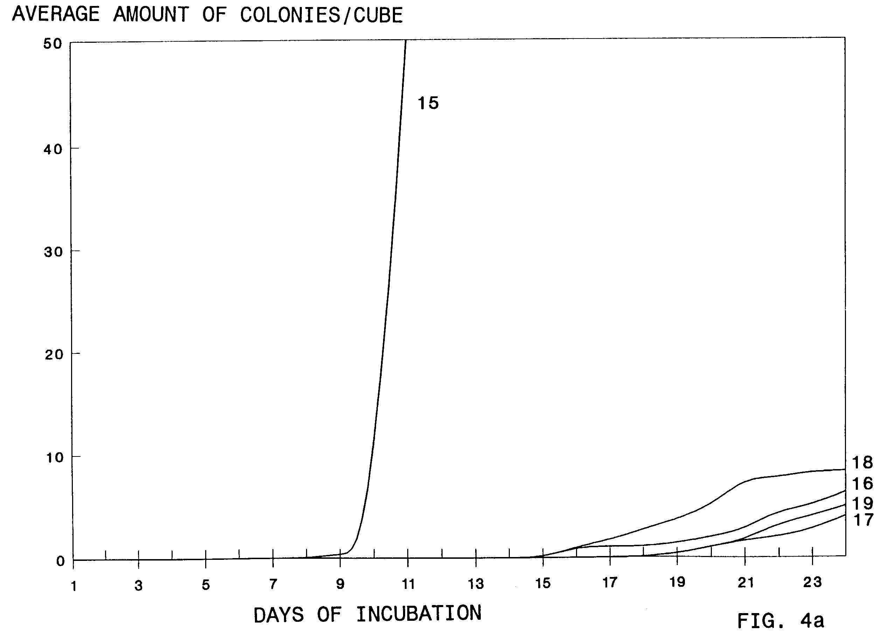

The results are summarized in figure 4.
It is clear that the treatment with a composition according to the invention (number 19) resulted in a protection against growth of *Aspergillus ochracheus* which was better than a treatment with the blank (number 15) or with natamycin alone (number 16) or a combination of natamycin and calcium propionate (number 17) or natamycin and calcium acetate (number 18).

### Example 3a

The experiment as described in example 3 was repeated except that the pieces of cheese were inoculated by *Aspergillus parasiticus* in stead of *Aspergillus ochracheus.* This strain of *Aspergillus parasiticus* is a species which is susceptible to the action of natamycin.

The pieces of cheese were inoculated with about 6 x 10³ CFU/cm² of spores of *Aspergillus parasiticus* (ATCC 11492) by applying 0.15 ml of a spore suspension containing about 10⁶ CFU/ml to the surface of each piece of cheese.
The different compositions used for the treatments are summarized in table 3a.

**TABLE 3a**

| NUMBER | COMPOSITION |
|---|---|
| | Figure 4a |
| 15 | blank Plasticoat® |
| 16 | natamycin 0.05% (reference) |
| 17 | natamycin 0.05% + Ca-propionate 2.0% |
| 18 | natamycin 0.05% + Ca-acetate 1.5% |
| 19 | natamycin 0.05% + Ca-propionate 2.0% + Ca-acetate 1.5% |

The results are summarized in figure 4a.

The effect of all treatments except for the blank have about the same result. Towards a species which is susceptible to the action of natamycin a composition according to the invention (number 19) have no additional advantage in comparison to a treatment with natamycin alone (number 16) or a combination of natamycin and calcium propionate (number 17) or natamycin and calcium acetate (number 18).

### Example 4

In the following experiment the inhibition of the growth on cheese of *Penicillium echinulatum* var. *discolor* by natamycin (0.05%) and by sodium benzoate (2%) alone or combined with calcium acetate (1.5%) was compared with the composition of the invention. (See table 4)

When necessary the pH of the different compositions were adjusted to 4.0 by the addition of a 90% solution of L(+)-lactic acid.

**TABLE 4**

| NUMBER | COMPOSITION |
|---|---|
| | Figure 5 |
| 20 | blank Plasticoat® |
| 21 | natamycin 0.05% (reference) |
| 22 | Na-benzoate 2.0% |
| 23 | Na-benzoate 2.0% + Ca-acetate 1.5% |
| 24 | natamycin 0.05% + Na-benzoate 2.0% |
| 25 | natamycin 0.05% + Na-benzoate 2.0% + Ca-acetate 1.5% |

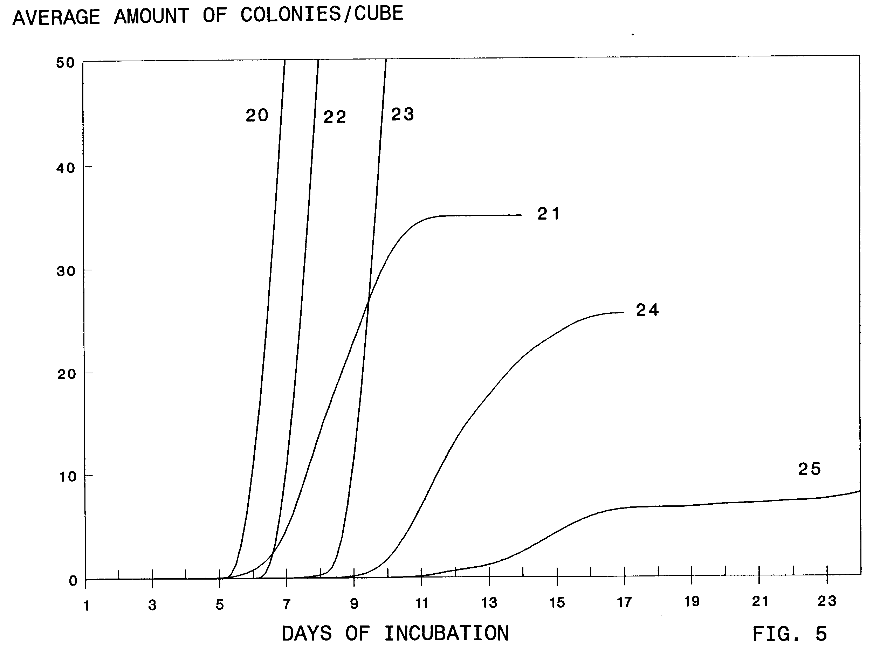

Further the experiment was executed in the same way as described in detail in example 1, except that for each treatment 6 pieces of cheese were taken in stead of 10.
The results are summarized in figure 5.
It is clear that the treatment with a composition according to the invention (number 25) resulted in a protection against growth of *Penicillium echinulatum* var. *discolor* which was better than the other treatments.

### References

1. Jedrychowski, L.; Reps, A.; Jarmul, I.; Babuchowski, A.
   "Use of natamycin for a protection of semihard cheeses against moulding"
   Brief communications of the XXIII International Dairy Congress, Montreal, October 8-12, 1990, Vol. I.
2. Daamen, C.B.G. and Berg, G. van den;
   "Prevention of mould growth on cheese by means of natamycin"
   Voedingsmiddelentechnologie, **18** (2), 26-29, (1985)
3. Neviani, E.; Emaldi, G.C.; Carini, S,;
   "Use of pimaricin as a fungicide on cheese rind: technology and the effects on the cheese surface flora"
   Latte, **6** (5), 335-343, (1981)
4. Morris, H.A.; Castberg, H.B.;
   "Control of surface growth on Blue cheese using pimaricin"
   Cultured Diary Products Journal, **15** (2), 21-23, (1980)
5. Baldini, P.; Palmia, F.; Raczynski, R.G.; Campanini, M.;
   "Use of pimaricin for preventing mould growth on Italian cured meat products"
   Industria Conserve, **54** (4), 305-307, (1979)
6. Weiss, G.;
   "Preservation of dairy products with chemicals"
   Deutsche Molkerei Zeitung **91** (50), 2351-2356, (1970)
7. Holley, R. A.;
   "Effect of sorbate and pimaricin on surface mould and ripening of Italian dry salami"
   Lebensmittel Wissenschaft und Technologie **19** (1), 59-65, (1986)
8. Ruig, W.G.; Berg, G. van den;
   "Influence of the fungicides sorbate and natamycin in cheese coatings on the quality of the cheese"
   Netherlands Milk and Dairy Journal, **39** (3), 165-172, (1985)
9. Holley, R.A.;
   "Prevention of surface mould growth on Italian dry sausage by natamycin and potassium sorbate"
   Applied and Environmental Microbiology, **41** (2), 422-429, (1981)
10. Lueck, H.; Cheesman, C.E.;
   "Mould growth on cheese as influenced by pimaricin (natamycin) or sorbate treatments"
   South African Journal of Dairy Technology, **10** (3), 143-146, (1978)
11. Mattson, N.;
   "Mould control on cheese. Experience with potassium sorbate (added to brine) and pimaricin for surface treatment of hard cheese"
   Svenska Mejeritidningen **69** (3), 14-15, (1977)
12. Verma, H.S.; Yadav, J.S.; Neelakantan, S.;
   "Preservative effect of selected antifungal agents on butter and cheese"
   Asian Journal of Dairy Research **7** (1), 34-38, (1988)
13. Guerzoni, M. E.; Giudici, P.; Piva, M.; Lerici, C.R.;
   "Use of Preservatives in intermediate moisture foods: experiments with model systems"
   Annali di Microbiologia ed Enzimologia **29**, 67-76, (1979)
14. Leitao, M. F. de F.;
   "Food preservatives, and factors affecting their efficiency in control of microorganisms"
   Coletanea do Instituto de Technologia de Alimentos **20** (2), 116-127, (1990)
15. Verma, H.S.; Yadav, J.S.; Neelakantan, S.;
   "Inhibitory effect of different preservatives on the growth of fungi isolated from cheese and butter"
   Indian Journal of Microbiology **28** (1-2), 60-65, (1988)
16. Ray, L.L.; Bullerman, L.B.;
   "Preventing growth of potentially toxic molds using antifungal agents"
   J. of Food Protection **45** (10), 953-963, (1982)
17. Goded, y Mur A.;
   "Spoilage of cheeses"
   Industria Lechera **61** (669), 8, 10, 12, (1981)
18. Corradini, C.; Battistotti, B.;
   "Additives in dairy technology"
   Scienza e Technica Lattiero Casearia **32** (3), 173-180, (1981)
19. Acott, K.M.; Labuza, T.P.;
   "Inhibition of Aspergillus niger in intermediate moisture food system"
   Journal of Food Science **40** (1), 137-139, (1975)
20. Aarnes, G.;
   Substances with antimicrobial effect of importance in cheesemaking"
   Meieriposten **63** (19), 415-422; (20), 450-456, (1974)
21. Tortorello, M.L.; Best, S.; Batt, C.A.; Woolf, H.D.; Bender, J.;
   "Extending the shelf-life of cottage cheese: Identification of spoilage flora and their control using food grade preservatives"
   Cultured Dairy Products Journal **26**, 8-9, 11-12, (1991)
22. Lodi, R.; Todesco, R.; Bozetti, V.;
   "New applications of natamycin on typical Italian cheeses"
   Microbiologie-Aliments-Nutrition **7**, 81-84, (1989)
23. DE-2529532, Gist-Brocades N.V.
   "Fungicidal composition containing a polyene antibiotic - dissolved in an alkanol-carboxylic acid mixture especially for the preservation of citrus fruit."
24. J-61146153, Nippon Nosan Kogyo
   "Feed used for rearing silkworms - obtained by spraying aqueous organic acid solution containing antibiotics (e.g. macrolide type) and/or antibacterial agent to treat mulberry leaf surface."
25. BE-848934, Gist-Brocades N.V.
   "Liquid antifungal compositions containing natamycin - and acidic organic compound for treating tinea etc."
26. Raab, W.P.;
   "Natamycin (Pimaricin); Properties and medical applications"
   Georg Thieme Verlag Stuttgart 1974.

## Claims

1. A composition comprising
- a polyene antifungal agent
- an acidic antifungal compound or salt thereof, said acid antifungal compound is benzoic acid, propionic acid, or sorbic acid and
- an additional acid or salt thereof, said additional acid is acetic acid or lactic acid.

2. A composition according to claim 1, wherein the antifungal agent is natamycin, lucensomycin, nystatin or amphotericin B.

3. A composition according to claim 1, wherein the salt of the acidic antifungal compound is an alkali metal or alkali earth metal salt.

4. A composition according to claim 1, 2 or 3 wherein the salt of the additional acid is an alkali metal or alkali earth metal salt.

5. A composition according to any one of the preceding claims which comprises from 0.005 to 2% (w/v) antifungal agent, from 0.01 to 10% (w/v) acidic antifungal compound and from 0.01 to 10% (w/v) additional acid.

6. A composition according to any one of the preceding claims for use as antifungal agent.

7. A solution comprising a composition as claimed in any one of the preceding claims wherein the solution comprises 0.01 to 2% (w/v) antifungal agent, 0.01 to 10% (w/v) acidic antifungal compound and from 0.01 to 10% (w/v) additional acid compound.

8. A coating emulsion comprising a composition a claimed in any one of claims 1 to 6 wherein the emulsion comprises 0.005 to 2% (w/v) antifungal agent, 0.01 to 10% (w/v) acidic antifungal compound and 0.01 to 10% (w/v) additional acid compound.

9. A method for treating food or agricultural product which comprises coating the product with a composition as claimed in any one of claims 1 to 6, a solution as claimed in claim 7 or an emulsion as claimed in claim 8.

10. A food and/or agricultural product coated with a composition as claimed in any one of claims 1 to 6, a solution as claimed in claim 7 or an emulsion as claimed in claim 8.

## Patentansprüche

1. Zusammensetzung, enthaltend
- ein Polyen-Pilzbekämpfungsmittel,
- eine saure Verbindung zur Pilzbekämpfung oder ein Salz hiervon, wobei diese Verbindung zur Pilzbekämpfung Benzoesäure, Propionsäure oder Sorbinsäure ist, und
- eine zusätzliche Säure oder ein Salz hiervon, wobei die zusätzliche Säure Essigsäure oder Milchsäure ist.

2. Zusammensetzung nach Anspruch 1, worin das Pilzbekämpfungsmittel Natamycin, Lucensomycin, Nystatin oder Amphotericin B ist.

3. Zusammensetzung nach Anspruch 1, worin das Salz der sauren Verbindung zur Pilzbekämpfung ein Alkalimetall- oder Erdalkalimetallsalz ist.

4. Zusammensetzung nach Anspruch 1, 2 oder 3, worin das Salz der zusätzlichen Säure ein Alkalimetall- oder Erdalkalimetallsalz ist.

5. Zusammensetzung nach einem der vorstehenden Ansprüche, die 0,005 bis 2 % (w/v) des Pilzbekämpfungsmittels, 0,01 bis 10 % (w/v) der sauren Verbindung zur Pilzbekämpfung und 0,01 bis 10 % (w/v) der zusätzlichen Säure enthält.

6. Zusammensetzung nach einem der vorstehenden Ansprüche zur Verwendung als Pilzbekämpfungsmittel.

7. Lösung, enthaltend eine Zusammensetzung, wie sie in einem der vorstehenden Ansprüche beansprucht ist, wobei die Lösung 0,01 bis 2 % (w/v) des Pilzbekämpfungsmittels, 0,01 bis 10 % (w/v) der sauren Verbindung zur Pilzbekämpfung und 0,01 bis 10 % (w/v) der zusätzlichen sauren Verbindung enthält.

8. Beschichtungsemulsion, enthaltend eine Zusammensetzung, wie sie in einem der Ansprüche 1 bis 6 beansprucht ist, wobei die Emulsion 0,005 bis 2 % (w/v) des Pilzbekämpfungsmittels, 0,01 bis 10 % (w/v) der sauren Verbindung zur Pilzbekämpfung und 0,01 bis 10 % (w/v) der zusätzlichen sauren Verbindung enthält.

9. Verfahren zum Behandeln eines Lebensmittels oder eines landwirtschaftlichen Produkts, wobei das Produkt mit einer Zusammensetzung, wie sie in einem der Ansprüche 1 bis 6 beansprucht wird, einer Lösung, wie sie im Anspruch 7 beansprucht wird, oder einer Emulsion, wie sie im Anspruch 8 beansprucht wird, beschichtet wird.

10. Lebensmittel und/oder landwirtschaftliches Produkt, das mit einer Zusammensetzung, wie sie in einem der Ansprüche 1 bis 6 beansprucht wird, einer Lösung, wie sie im Anspruch 7 beansprucht wird, oder einer Emulsion, wie sie im Anspruch 8 beansprucht wird, beschichtet ist.

## Revendications

1. Composition comprenant :
- un agent antifongique de type polyène;
- un composé antifongique acide ou un sel de celui-ci, le composé antifongique acide est l'acide benzoïque, l'acide propionique ou l'acide sorbique, et
- un acide supplémentaire ou un sel de celui-ci, l'acide supplémentaire est l'acide acétique ou l'acide lactique.

2. Composition suivant la revendication 1, dans laquelle l'agent antifongique est la natamycine, la lucensomycine, la nystatine ou l'amphotéricine B.

3. Composition suivant la revendication 1, dans laquelle le sel du composé antifongique acide est un sel de métal alcalin ou de métal alcalino-terreux.

4. Composition suivant la revendication 1, 2 ou 3, dans laquelle le sel de l'acide supplémentaire est un sel de métal alcalin ou de métal alcalino-terreux.

5. Composition suivant l'une quelconque des revendications précédentes, qui comprend de 0,005 à 2% (p/v) d'agent antifongique, de 0,01 à 10% (p/v) de composé antifongique acide et de 0,01 à 10% (p/v) d'acide supplémentaire.

6. Composition suivant l'une quelconque des revendications précédentes, à utiliser comme agent antifongique.

7. Solution comprenant une composition suivant l'une quelconque des revendications précédentes, dans laquelle la solution comprend 0,01 à 2% (p/v) d'agent antifongique, de 0,01 à 10% (p/v) de composé antifongique acide et de 0,01 à 10% (p/v) du composé acide supplémentaire.

8. Emulsion d'enduction comprenant une composition suivant l'une quelconque des revendications 1 à 6, dans laquelle l'émulsion comprend 0,005 à 2% (p/v) d'agent antifongique, de 0,01 à 10% (p/v) de composé antifongique acide et de 0,01 à 10% (p/v) du composé acide supplémentaire.

9. Procédé de traitement de produits alimentaires et agricoles, qui comprend l'enduction du produit avec une composition suivant l'une quelconque des revendications 1 à 6, une solution suivant la revendication 7 ou une émulsion suivant la revendication 8.

10. Produit alimentaire et/ou agricole enduit d'une composition suivant l'une quelconque des revendications 1 à 6, d'une solution suivant la revendication 7 ou d'une émulsion suivant la revendication 8.
